# FASCICULE DE BREVET EUROPEEN

(11) **EP 2 410 188 B1**
(45) Date de publication et mention de la délivrance du brevet: **31.08.2016**
(21) Numéro de dépôt: 11005184.4
(22) Date de dépôt: 27.06.2011
(51) Int. Cl.: F15B 15/20, G01L 9/00

(54) **SERVOCOMMANDE MUNIE D'UN DISPOSITIF DE DÉTECTION D'EFFORT LIMITE**
SERVOBETÄTIGER MIT MAXIMALKRAFTMESSGERÄT
SERVOACTUATOR WITH LIMIT EFFORT DETECTION

(30) Priorité: 19.07.2010 FR 1003021
(43) Date de publication de la demande: 25.01.2012
(73) Titulaire: Airbus Helicopters, 13725 Marignane Cedex (FR)
(72) Inventeur: Bihel, Jean-Romain, 13740 Le Rove (FR); Leguay, Pascal, 13980 Alleins (FR); Carlavan, Cédric, 38080 Saint Alban De Roche (FR); Bourdais, Nicolas, 78620 L'Etang la Ville (FR)
(74) Mandataire: GPI & Associés

(56) Documents cités:
- FR-A5- 2 059 805
- US-A1- 2005 092 094

## Description

La présente invention concerne une servocommande d'aéronef munie d'un dispositif de détection d'effort limite, cet aéronef étant par exemple un giravion et notamment un hélicoptère.

Classiquement, un aéronef comporte des organes de manoeuvre manoeuvrables par un pilote, tels que les pales d'un rotor de sustentation d'un hélicoptère ou encore des gouvernes de direction d'un avion par exemple.

A l'aide de commandes de vol, le pilote 3manoeuvre donc les organes de manoeuvre de l'aéronef. Toutefois, les efforts à fournir sont parfois très importants pour déplacer ces organes de manoeuvre.

Par suite, la chaîne cinématique reliant une commande de vol à un organe de manoeuvre est souvent munie d'une servocommande permettant au pilote de gouverner l'aéronef sans difficulté et avec précision.

Plus particulièrement, un hélicoptère est muni d'un rotor principal assurant sa sustentation et sa propulsion. Pour diriger l'hélicoptère, un pilote modifie le pas des pales du rotor principal, c'est-à-dire leur incidence par rapport à l'écoulement d'air incident.

Par suite, le giravion comporte un plateau cyclique pourvu d'un plateau inférieur non tournant et d'un plateau supérieur tournant. Le plateau inférieur non tournant est relié aux commandes de vol du pilote, généralement par trois lignes de commande distinctes alors que le plateau supérieur tournant est relié à chaque pale respectivement par une bielle. Le plateau cyclique est ainsi un plateau de commande, qui coulisse verticalement le long du mât du rotor principal pour commander le pas général des pales du rotor principal tout en pouvant osciller dans tous les sens autour d'une rotule pour commander le pas cycliques des pales.

Les oscillations et le déplacement vertical du plateau cyclique, commandés par le pilote, sont donc à l'origine de la variation du pas des pales permettant au pilote de diriger l'hélicoptère.

Classiquement, le pilote commande le plateau cyclique via des commandes mécaniques liées à ce plateau cyclique par des bielles. Toutefois, les efforts à exercer par le pilote pour manoeuvrer le plateau cyclique sont très importants, en particulier si la masse du giravion est également importante.

Par conséquent, une servocommande est alors agencée entre une portion amont et une portion aval de chaque chaîne cinématique de commande. Le pilote sollicite alors les servocommandes sans efforts particuliers via la portion amont, puis ces servocommandes retranscrivent l'ordre du pilote et agissent sur la portion aval de la chaîne cinématique.

De même, un hélicoptère est pourvu d'un rotor arrière dont le pas des pales peut être modifiable via une servocommande.

Bien entendu, il en va de même pour des ailerons d'avions, par exemple, manoeuvrés via des servocommandes.

On note que certains aéronefs modernes comportent des commandes de vol électriques qui remplacent les liaisons mécaniques reliant les commandes de vol aux servocommandes.

De façon usuelle, les servocommandes comportent au moins un corps externe de forme cylindrique dans lequel translate un élément coulissant muni d'une tige équipée d'un piston de commande, ce piston de commande délimitant une chambre de rétraction et une chambre d'extension à l'intérieur de ce corps externe, voir US 2005/092094 A1.

De plus, la servocommande peut comporter un distributeur hydraulique, ou coopérer avec un tel distributeur hydraulique. Le déplacement du piston de commande de l'élément coulissant par rapport au corps externe est alors commandé par le distributeur hydraulique qui est actionné par les commandes de vol du pilote de l'hélicoptère, au travers de la portion amont d'une chaîne cinématique. En fonction des ordres donnés, le distributeur hydraulique alimente en fluide hydraulique la chambre de rétraction ou la chambre d'extension pour requérir la rétraction ou l'extension de la servocommande.

On comprend que l'on appelle dans la suite du texte « chambre de rétraction » une chambre provoquant la rétraction de la servocommande lorsque ladite chambre est remplie par un fluide. A l'inverse, on appelle « chambre d'extension » une chambre provoquant l'extension de la servocommande lorsque ladite chambre est remplie par un fluide.

Deux modes de réalisations des servocommandes coexistent alors.

Selon un premier mode de réalisation, le piston de commande est agencé sur un point fixe de l'aéronef, le corps se déplaçant en fonction des ordres reçus et étant relié à la portion aval de la chaîne cinématique. L'homme du métier dénomme ce type de servocommande selon l'expression « servocommande à corps mobile ».

A contrario, selon un deuxième mode de réalisation, le corps est solidarisé à un point fixe de l'aéronef, le piston de commande se déplaçant en fonction des ordres reçus et étant relié à la portion aval de la chaîne cinématique. L'homme du métier dénomme donc ce type de servocommande selon l'expression « servocommande à corps fixe ».

En outre, quel que soit le mode de réalisation, on trouve des servocommandes dénommées à « simple corps » ou à « double corps » par l'homme du métier.

Une servocommande à simple corps est alors munie d'un unique corps définissant une chambre de rétraction et une chambre d'extension séparée par un piston de commande. La chambre de rétraction et la chambre d'extension sont alors alimentées par un seul distributeur hydraulique.

Cette servocommande remplit parfaitement sa fonction. Néanmoins, pour des raisons de sécurité, l'homme du métier tend, à partir d'un certain niveau d'effort à développer, à utiliser une servocommande à double corps.

Une servocommande à double corps comporte alors un corps inférieur et un corps supérieur assemblés en tandem ou en parallèle.

Par exemple, une servocommande à double corps en tandem comprend un élément coulissant muni d'une tige et de deux pistons, chaque piston délimitant dans chaque corps une chambre de rétraction et une chambre d'extension.

De plus, deux distributeurs hydrauliques distincts, actionnés par un levier d'entrée commun relié aux commandes du pilote, alimentent respectivement les chambres de rétraction et d'extension des corps inférieur et supérieur.

Il existe par ailleurs des servocommandes munies de trois corps voire plus.

Durant un vol à grande vitesse, des évolutions extrêmes de l'aéronef peuvent introduire des contraintes mécaniques importantes dans la structure de l'aéronef. Au-delà de facteurs de charge donnés, il y a un risque d'endommagement de cette structure.

Pour prévenir le pilote que l'aéronef atteint une limite d'évolution, il est possible de prévoir un dispositif de détection d'effort limite sur une servocommande. Lorsque l'effort exercé sur la servocommande atteint un seuil limite, à savoir un effort de traction ou un effort de compression, le dispositif de détection d'effort limite déclenche une alerte, visuelle par exemple, pour en informer le pilote.

Classiquement, le dispositif de détection d'effort limite comprend un élément de détection muni d'une tige équipée d'un piston de détection coulissant dans un espace de détection, cet espace de détection comprenant deux chambres de détection délimitées par le piston de détection, indépendantes des chambres de rétraction et d'extension du corps externe. La première chambre de détection est alimentée en fluide par le circuit hydraulique de l'aéronef, la deuxième chambre de détection débouchant sur l'extérieur de la servocommande.

De plus, la tige de l'élément de détection saille du corps de la servocommande pour être relié à la portion aval de la chaîne cinématique. Cette partie saillante de l'élément de détection comprend en outre un levier apte à coopérer avec un interrupteur à poussoir.

En dessous du seuil limite, la pression régnant dans la chambre de détection maintient le piston de détection en butée haute de manière à éloigner son levier de l'interrupteur. Par contre, lorsque le seuil est atteint, la pression régnant dans la chambre de détection ne permet plus de maintenir le piston de détection en butée haute. Le piston de détection atteint donc une butée basse, le levier actionnant alors l'interrupteur.

Pour amortir le déplacement du piston de détection en cas de variation d'effort externe à haute fréquence ou de manoeuvres rapides de la servocommande, le dispositif de détection d'effort limite peut comporter un moyen générant une perte de charge, de type diaphragme par exemple, en amont de la première chambre de détection.

Afin d'éviter un passage du fluide de la chambre de détection vers l'extérieur de la servocommande, le piston de détection comporte un joint. Ce joint étant sollicité dynamiquement, des fuites vers l'extérieur de la servocommande peuvent apparaître et conduire à des actions de maintenance.

De plus, le dispositif de détection d'effort limite est soumis aux efforts subis par la servocommande en étant relié à la chaîne cinématique de commande. Dès lors, il est dimensionné pour pouvoir supporter lesdits efforts. Il en résulte un coût financier et une masse non négligeable.

Enfin, le coulissement du piston de détection induit de fait un jeu dans la chaîne cinématique de commande en cas de chute de pression dans le circuit hydraulique alimentant en fluide le dispositif de détection d'effort limite.

La présente invention a alors pour objet de proposer une servocommande alternative permettant notamment de s'affranchir des limitations mentionnées précédemment.

Selon l'invention, une servocommande est pourvue d'au moins un corps délimitant un espace interne et d'un élément coulissant muni d'un piston de commande apte à coulisser dans l'espace interne, le piston de commande partageant l'espace interne en une chambre de rétraction et une chambre d'extension aptes à être alimentées par un fluide délivré par une source, un liquide fourni par un circuit hydraulique via un distributeur hydraulique par exemple, la servocommande ayant au moins un dispositif de détection d'effort limite.

La servocommande est remarquable en ce que le dispositif de détection d'effort limite comporte :
- un carter solidaire du corps délimitant un espace de détection,
- un organe mobile coulissant dans l'espace de détection, l'organe mobile partageant cet espace de détection en une première chambre de détection débouchant sur l'espace interne et une deuxième chambre de détection, maintenue à une pression donnée en étant alimentée en fluide par la source précitée ou débouchant sur une chambre de l'espace interne distincte de la chambre communiquant avec la première chambre de détection par exemple,
- un moyen de détection de la position de l'organe mobile dans l'espace de détection pour déterminer si l'organe mobile a atteint une position limite prédéterminée correspondant à la présence d'un effort limite exercé sur ladite servocommande.

On note que l'effort statique exercé sur la servocommande en compression ou en traction varie linéairement avec la pression du fluide contenu dans la chambre de l'espace interne communiquant avec la première chambre de détection.

En effet, lorsque l'effort exercé sur la servocommande augmente, la pression augmente dans la première chambre de détection. A partir d'un certain seuil d'effort exercé sur la servocommande, il en résulte un déplacement de l'organe mobile dans l'espace de détection. Le dispositif de détection selon l'invention détecte alors que la servocommande subit un effort supérieur ou égal à un effort limite prédéterminé lorsque l'organe mobile atteint une position limite prédéterminée détectée par le moyen de détection.

L'organe mobile ne saille pas à l'extérieur de la servocommande. Ainsi, le dispositif de détection n'emploie pas un joint dynamique susceptible de générer une fuite vers l'extérieur de la servocommande.

De plus, l'organe mobile n'est pas lié à la chaîne cinématique de commande. Dès lors, le dimensionnement du dispositif de détection s'avère relativement simple.

La servocommande peut en outre comporter une ou plusieurs des caractéristiques additionnelles qui suivent.

Selon un aspect de l'invention, le dispositif de détection est amovible.

Par exemple, le corps est muni d'un orifice débouchant sur l'espace interne de ce corps, l'orifice étant obturé par un moyen dédié en l'absence du dispositif de détection. De plus, ce corps peut comporter un filetage apte à coopérer avec un filetage du carter.

Pour équiper le corps du moyen de détection, on enlève alors le moyen dédié et on solidarise le carter au corps en utilisant lesdits filetages par exemple.

Un joint peut être agencé entre le carter et le corps. Ce joint n'étant pas sollicité dynamiquement, les risques de fuite sont négligeables.

En variante, le moyen de détection peut être au contraire inamovible. Par exemple, le carter et le corps forment une pièce d'un seul tenant.

Selon un autre aspect de l'invention, le corps comprend un moyen de fixation distinct du dispositif de détection apte à fixer la servocommande à un élément de fixation externe, à savoir un élément de fixation externe à une chaîne cinématique ou à un point fixe. L'organe mobile ne subit donc pas les efforts exercés sur la servocommande.

De plus, la servocommande ayant par exemple une liaison apte à relier la deuxième chambre de détection à un moyen de pressurisation à une pression donnée, tel que la source alimentant en fluide l'espace interne à savoir le circuit hydraulique d'un aéronef par exemple, la liaison comporte éventuellement un premier moyen générant une perte de charge de type diaphragme par exemple.

Selon une autre variante, la deuxième chambre de détection est reliée à la chambre de l'espace interne n'étant pas en relation avec la première chambre de détection.

En outre, un deuxième moyen générant une perte de charge peut être agencé entre la première chambre de détection et l'espace interne.

Une variation à haute fréquence de l'effort externe exercé sur la servocommande ou une manoeuvre rapide de la servocommande générant une pression transitoire importante dans l'espace interne n'a alors pas d'effet sur le déplacement de l'organe mobile.

Par ailleurs, le moyen de détection peut être disposé sur le carter. Cette caractéristique permet de limiter les risques de fuite hydraulique lorsque le fluide est un liquide de type huile par exemple.

Par exemple, le moyen de détection comporte un interrupteur à ampoule et un aimant disposé sur l'organe mobile.

Plus précisément, un interrupteur à ampoule est un interrupteur électrique commandé par un champ magnétique. Il est pourvu d'une lame principale et de deux lames secondaires agencées dans une ampoule. La lame principale est normalement en contact avec une première lame secondaire mais bascule sous l'effet d'un champ magnétique pour venir en contact avec la deuxième lame secondaire.

Un tel interrupteur à ampoule est dénommé « interrupteur reed » ou encore « reed switch », voire même « ampoule ILS » par l'homme du métier.

En se déplaçant, l'aimant de l'organe mobile peut donc faire basculer l'interrupteur à ampoule d'une position à une autre.

Pour favoriser la détection de la position de l'organe mobile, on dimensionne l'espace de détection afin que la course de l'organe mobile soit suffisante pour permettre la détection de l'effort limite. Eventuellement, on peut prévoir un moyen d'amplification du mouvement de l'organe mobile.

Pour informer un opérateur de la présence d'un effort limite exercé sur la servocommande, le dispositif de détection comporte optionnellement un moyen d'alerte commandé par le moyen de détection, un moyen d'alerte visuelle par exemple. En effet, le moyen d'alerte déclenche une alerte quand l'organe mobile se situe dans une position limite correspondant à la sollicitation de la servocommande selon un effort limite prédéterminé

Par ailleurs, en fonction du mode de réalisation, la servocommande comporte indifféremment :
- soit un unique dispositif de détection ayant une première chambre de détection débouchant sur la chambre de rétraction de la servocommande,
- soit un unique dispositif de détection ayant une première chambre de détection débouchant sur la chambre d'extension de la servocommande,
- soit un dispositif de détection ayant une première chambre de détection débouchant sur la chambre de rétraction de la servocommande, et un dispositif de détection ayant une première chambre de détection débouchant sur la chambre d'extension de la servocommande.

De plus, la servocommande ayant deux corps délimitant chacun un espace interne et un élément coulissant muni d'un piston de commande par espace interne, au moins un corps comporte au moins un dispositif de détection d'effort limite.

Par ailleurs, le dispositif de détection peut comporter un moyen de rappel de l'organe mobile pour éloigner ledit organe mobile de ladite position limite. Le moyen de rappel tend alors à positionner l'organe mobile dans une position stabilisée correspondant à une servocommande dont l'espace interne n'est pas pressurisé par la source dédiée à cet effet.

Par exemple, le moyen de rappel peut alors comprendre un ressort solidaire de l'organe mobile.

Selon une autre variante pouvant être combinée avec l'utilisation d'un moyen de rappel, l'organe mobile comprend une première section et une deuxième section distinctes, la deuxième section de l'organe mobile en regard de la deuxième chambre de détection étant inférieure à la première section de l'organe mobile en regard de la première chambre de détection par exemple.

Enfin, la servocommande comprend optionnellement un moyen de blocage temporaire de l'élément coulissant par rapport au corps. A l'aide de ce moyen de blocage, le dispositif de détection permet de tester le fonctionnement de la servocommande et du distributeur hydraulique.

L'invention et ses avantages apparaîtront avec plus de détails dans le cadre de la description qui suit avec des exemples de réalisation donnés à titre illustratif en référence aux figures annexées qui représentent :
- les figures 1 et 2, des schémas présentant une servocommande à simple corps selon un premier mode de réalisation,
- la figure 3, un schéma présentant une servocommande à simple corps selon un deuxième mode de réalisation,
- la figure 4, un schéma présentant une servocommande à simple corps selon un troisième mode de réalisation,
- la figure 5, un schéma présentant une servocommande à double corps selon un troisième mode de réalisation,
- les figures 6 à 8, un schéma présentant une servocommande munie d'un moyen de blocage.

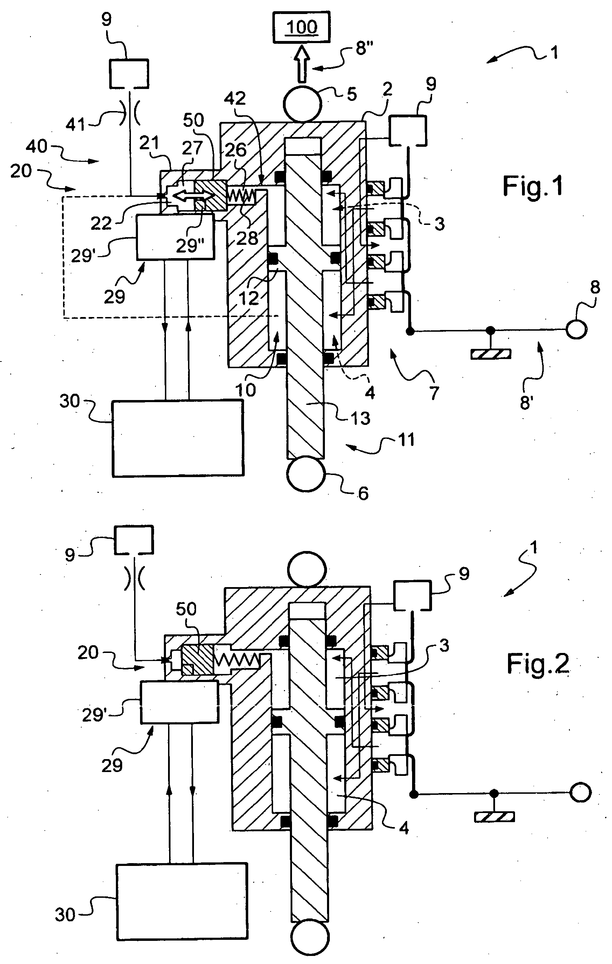

La figure 1 présente une servocommande 1 selon un premier mode de réalisation.

Indépendamment du mode de réalisation, la servocommande 1 comporte au moins un corps 2 délimitant un espace interne 10.

De plus, la servocommande comprend un élément coulissant 11 muni d'une tige 13 et d'un piston de commande 12 par corps 2. Chaque piston de commande 12 partage l'espace interne 10 correspondant en une chambre d'extension 3 et une chambre de rétraction 4.

En référence à la figure 1, la servocommande peut être une servocommande à simple corps, à savoir munie d'un seul corps et donc d'un élément coulissant 11 pourvu d'un unique piston de commande 12. On verra par la suite que cette servocommande peut être à double corps, en possédant deux corps et un élément coulissant muni de deux pistons de commande.

La servocommande représentée possède en outre un distributeur hydraulique 7 pour acheminer un fluide hydraulique provenant d'une source 9 vers la chambre d'extension 3 ou la chambre de rétraction 4. Le distributeur hydraulique 7 est avantageusement fixé à la servocommande 1, mais pourrait être désolidarisé de cette servocommande 1.

Dans une application aéronautique, la servocommande est éventuellement disposée sur une chaîne cinématique reliant une commande de vol 8 à un organe de manoeuvre 100. Dès lors, une portion amont 8' de la chaîne cinématique relie la commande de vol 8 au distributeur hydraulique 7, une portion aval 8" de la chaîne cinématique reliant un premier moyen de fixation 5 de la servocommande 1 à l'organe de manoeuvre 100.

Un deuxième moyen de fixation 6 permet de fixer la servocommande 1 à un point fixe. On note que le premier moyen de fixation 5 est solidaire du corps 2, le deuxième moyen de fixation 6 étant fixé à l'extrémité saillante de la tige 13 de l'élément coulissant 11. Toutefois, l'inverse est bien sûr envisageable pour obtenir une servocommande à corps fixe.

La source 9 de fluide est alors par exemple le circuit hydraulique de l'aéronef, cette source délivrant une pression constante au distributeur hydraulique 7.

La commande de vol 8 commande le distributeur hydraulique 7 qui alimente la chambre d'extension 3 pour requérir une extension de la servocommande ou la chambre de rétraction 4 pour requérir une rétraction de cette servocommande le cas échéant.

La servocommande 1 comprend au moins un dispositif de détection 20 d'effort limite pour déterminer si la servocommande 1 subit un effort supérieur ou égal à un effort limite prédéterminé.

Ce dispositif de détection 20 comprend un carter 21 solidarisé au corps 2. Ce carter 21 peut être fixé de manière amovible au corps 2 dans le cadre d'un dispositif de détection amovible, ou de manière inamovible.

Le carter 21 délimite alors un espace de détection 22 creux débouchant sur l'espace interne 10 du corps 2.

Par suite, un dispositif de détection 20 comprend un organe mobile 50 apte à coulisser dans l'espace de détection 22. Cet organe mobile 50 partage alors l'espace de détection en une première chambre de détection 26 débouchant sur l'espace interne 10 creux, et en une deuxième chambre de détection 27 remplie d'un fluide.

Par exemple, la deuxième chambre de détection 27 est alimentée en fluide par une liaison 40 conduisant à la source 9. Cette liaison 40 peut comporter un premier moyen générant une perte de charge 41, à savoir un diaphragme par exemple. La deuxième chambre de détection 27 est alors remplie d'un fluide maintenu à une pression donnée.

On note que selon la variante illustrée par une liaison représentée par des traits en pointillés sur la figure 1, la deuxième chambre de détection 27 peut être reliée à la chambre de l'espace interne 10 n'étant pas en relation avec la première chambre de détection 26. Par exemple, la première chambre de détection 26 communiquant avec la chambre d'extension 3, la deuxième chambre de détection communique avec la chambre de rétraction 4. Un moyen de limitation du débit générant une perte de charge peut être disposé sur la liaison allant de la deuxième chambre de détection 27 à l'espace interne 10.

De même, un deuxième moyen générant une perte de charge 42 peut être agencé entre la première chambre de détection 26 et l'espace interne 10.

Pour détecter un effort limite, le dispositif de détection comprend un moyen de détection 29 de la position de l'organe mobile 50 dans l'espace de détection 22. A partir d'une position donnée de cet organe mobile 50, le moyen de détection 29 ordonne à un moyen d'alerte 30 de signaler que la servocommande subit un effort supérieur ou égal audit effort limite sur la chaîne cinématique. En effet, le moyen d'alerte 30 déclenche une alerte, visuelle ou sonore, lorsqu'il reçoit un signal donné provenant du moyen de détection 29.

Par exemple, le moyen de détection comporte un interrupteur ouvert lorsque la servocommande subit un effort inférieur à un effort limite. Dès lors, le moyen d'alerte n'est pas alimenté électriquement et ne déclenche donc pas une alerte. A l'inverse, lorsque la servocommande subit un effort supérieur ou égal à l'effort limite, l'interrupteur se ferme pour alimenter électriquement le moyen d'alerte qui allume une diode par exemple.

Selon une autre version, l'interrupteur est fermé lorsque la servocommande subit un effort inférieur à un effort limite, et ouvert lorsque la servocommande subit un effort supérieur ou égal à l'effort limite.

En référence à la figure 1, lorsque la servocommande subit un effort inférieur au seuil donné, la pression du fluide présent dans la première chambre de détection 26, et de fait dans la chambre du corps 2 communiquant avec cette première chambre de détection 26, n'est pas suffisante pour pousser l'organe mobile dans ladite position limite donnée.

Par contre, en référence à la figure 2, lorsque l'effort subi par la servocommande 1 augmente, la pression du fluide présent dans la première chambre de détection 26 et dans la chambre du corps 2 reliée à cette première chambre de détection 26 augmente. L'organe mobile effectue alors une translation et atteint ladite position limite donnée. Le moyen de détection 29 en informe par suite le moyen d'alerte 30.

L'invention ne nécessite donc pas un dispositif de détection solidaire d'un moyen de fixation 5, 6 à un élément de fixation externe à la servocommande. Au contraire, les moyens de fixation 5, 6 de la servocommande 1 sont distincts du dispositif de détection 20 d'effort limite.

Pour détecter la position de l'organe mobile 50, le moyen de détection peut comprendre un capteur de position disposé sur le carter 21, à l'extérieur de l'espace de détection 22.

Par exemple, le capteur de position est un interrupteur à ampoule 29' coopérant avec un aimant 29" de l'organe mobile 50.

L'interrupteur à ampoule est un interrupteur muni de deux lames secondaires et d'une lame principale basculante. Quand la lame principale est en contact avec la première lame secondaire, l'interrupteur à ampoule ne déclenche pas l'alerte. A l'inverse, lorsque l'organe mobile atteint une position donnée, l'aimant de l'organe mobile fait basculer la lame principale vers la deuxième lame secondaire, le moyen de détection 29 déclenchant alors une alerte.

Selon le premier mode de réalisation représenté sur les figures 1 et 2, la servocommande 1 est munie d'un dispositif de détection pour déterminer si cette servocommande 1 subit une compression supérieure ou égale à un seuil donné.

La deuxième chambre de détection 26 du dispositif de détection 20 débouche alors sur la chambre d'extension 3.

On note, de plus, que selon la variante du premier mode de réalisation représentée, le dispositif de détection 20 comporte un moyen de rappel 28 de l'organe mobile.

Par exemple, le moyen de rappel est un ressort, l'organe mobile étant un piston de détection, une membrane ou tout autre moyen équivalent par exemple.

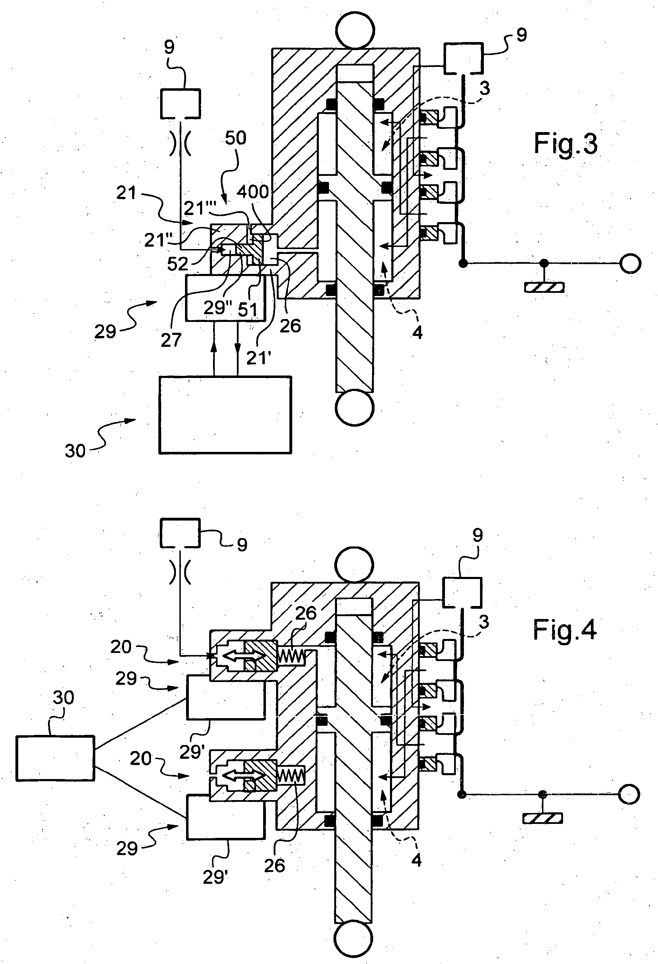

Selon le deuxième mode de réalisation représenté sur la figure 3, la servocommande 1 est munie d'un dispositif de détection pour déterminer si cette servocommande 1 subit un effort de traction supérieur ou égal à un effort limite donné.

La deuxième chambre de détection 26 du dispositif de détection 20 débouche alors sur la chambre de rétraction 4.

On note de plus que selon la variante du deuxième mode de réalisation représentée, le dispositif de détection 20 comporte un organe mobile 50 muni de sections différentielles, au lieu d'utiliser un moyen de rappel 28 ou en complément de ce moyen de rappel 28.

Par conséquent, l'organe mobile 50 comprend une première section 51 et une deuxième section 52 distinctes, coopérant avec un carter 21 à sections différentielles muni d'une zone de grande section 21' dans laquelle coulisse la première section 51 et d'une zone de petite section 21" dans laquelle coulisse la deuxième section 52 de l'organe mobile 50.

Par exemple, la deuxième section 52 de l'organe mobile 50 en regard de la deuxième chambre de détection 27 est inférieure à la première section 51 de l'organe mobile 50 en regard de la première chambre de détection 26. En fonction du besoin l'inverse est aussi possible, en fonction de la différence de pression entre la pression régnant dans la deuxième chambre de détection et la pression régnant dans la première chambre de détection.

Par ailleurs, l'espace 400 compris entre la zone de grande section 21' du carter 20 et la petite section 52 de l'organe mobile 50 est muni d'un orifice 21"'. Cet orifice 21'" est alors relié à un moyen de stockage hydraulique de type réservoir par une liaison non représentée. Ainsi, si un fluide passe de la première chambre de détection vers cet espace 400, malgré la présence d'un joint par exemple, ce fluide sera dirigé vers un endroit dédié sans engendrer d'inconvénients.

On note qu'en variante, il est possible de connecter la source 9 à cet orifice 21'" par une connexion munie d'un moyen de limitation du débit de type diaphragme par exemple. Eventuellement la deuxième chambre de détection 27 peut alors être reliée à la chambre de l'espace interne 10 n'étant pas en relation avec la première chambre de détection 26.

De même, la liaison entre l'espace interne 10 et la première chambre de détection 26 peut comporter un tel moyen de limitation.

En outre, on note qu'il est possible d'associer un organe mobile à sections différentielles avec un moyen de rappel, le moyen de rappel permettant entre autre notamment de réaliser des tests de fonctionnement.

Selon le troisième mode de réalisation représenté sur la figure 4, la servocommande 1 est munie d'un premier dispositif de détection pour déterminer si cette servocommande 1 subit un effort de compression supérieur ou égal à un effort limite donné, et d'un deuxième dispositif de détection pour déterminer si cette servocommande 1 subit un effort de traction supérieur ou égal à un effort limite donné.

La deuxième chambre de détection 26 du premier dispositif de détection 20 débouche sur la chambre d'extension 3, la deuxième chambre de détection 26 du deuxième dispositif de détection 20 débouchant alors sur la chambre de rétraction 4.

Les moyens de détection 29 du premier dispositif de détection et du deuxième dispositif de détection sont par exemple reliés à un unique moyen d'alerte 30.

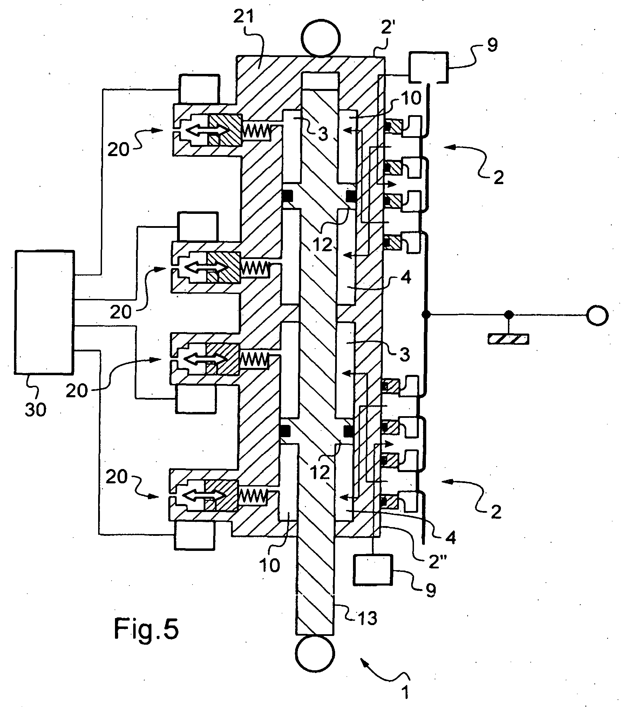

En référence à la figure 5, l'invention s'applique aussi à une servocommande 1 munie de deux corps 2, un corps supérieur 2' et un corps inférieur 2".

La servocommande comporte alors au moins un dispositif de détection 20, quatre dispositifs de détection selon la version schématisée.

Il est intéressant de noter que l'invention peut permettre de déterminer si les deux corps de la servocommande sont synchronisés.

Dans une position stabilisée, les deux chambres de rétraction et les deux chambres d'extension subissent une pression identique. A l'inverse, si les deux corps sont désynchronisés, la pression va baisser dans une chambre de chaque corps et augmenter dans l'autre chambre de chaque corps.

Par suite, deux dispositifs de détection reliés aux chambres ayant une pression accrue par rapport au niveau de pression théorique peuvent déclencher une alerte.

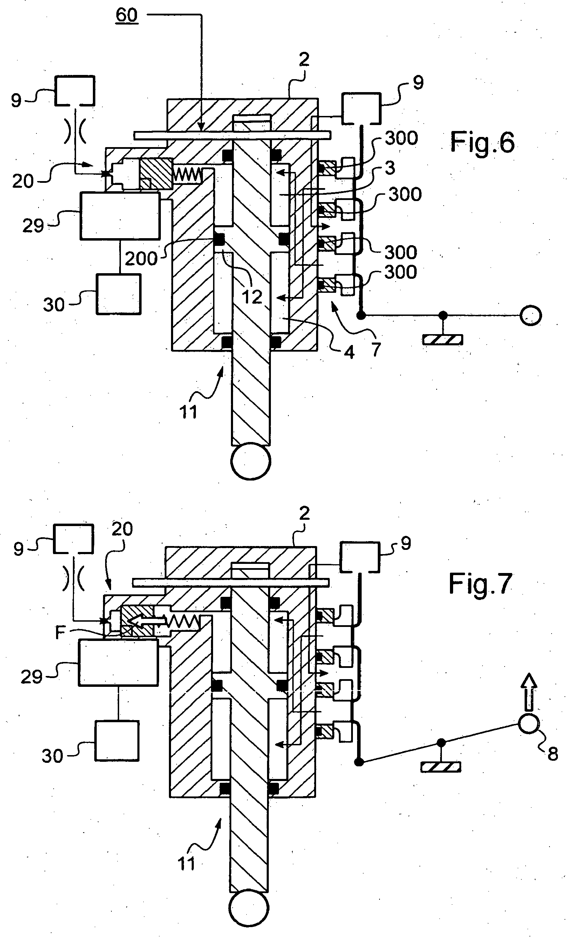

En référence à la figure 6, la servocommande peut comprendre un moyen de blocage 60 temporaire de l'élément coulissant 11 par rapport à un corps 2.

A l'aide d'un tel moyen de blocage 60, le dispositif de détection 20 permet de déterminer si le joint 200 de piston de commande 12 de l'élément coulissant ou des joints 300 du distributeur hydraulique 7 font l'objet de fuite.

Au repos, c'est-à-dire lorsque la servocommande n'est pas alimentée en fluide par le distributeur hydraulique 7, un opérateur immobilise l'élément coulissant 11 à l'aide du moyen de blocage 60, un axe traversant la tige de l'élément coulissant et le corps 2 par exemple.

Conformément à la figure 7, l'opérateur manoeuvre la commande de vol pour alimenter la chambre de l'espace interne 10 communiquant avec la première chambre de détection 26, la chambre d'extension 3 sur l'exemple représentée. En l'absence de fuite, la pression augmente dans ladite chambre et provoque un déplacement de l'organe mobile 50 selon la flèche F. Ce déplacement induit alors un déclenchement du moyen d'alerte 30.

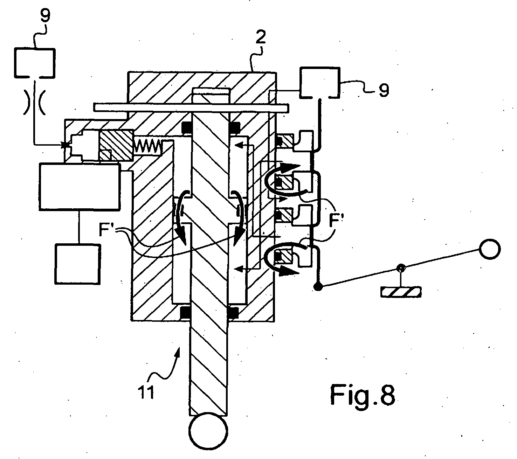

A l'inverse, en référence à la figure 8, en cas de fuite représentée par les flèches F', la pression n'augmente pas ou augmente de façon insuffisante dans ladite chambre. Par conséquent, si le moyen d'alerte ne s'allume pas, l'opérateur peut en déduire que certains joints de la servocommande sont défectueux.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Servocommande (1) pourvue d'au moins un corps (2) délimitant un espace interne (10) et d'un élément coulissant (11) muni d'un piston de commande (12) apte à coulisser dans ledit espace interne (10), ledit piston de commande (12) partageant ledit espace interne (10) en une chambre de rétraction (4) et une chambre d'extension (3) aptes à être alimentées par un fluide délivré par une source (9), ladite servocommande (1) ayant au moins un dispositif de détection (20) d'effort limite,
**caractérisée en ce que** ledit dispositif de détection (20) d'effort limite comporte :
- un carter (21) solidaire dudit corps (2) délimitant un espace de détection (22),
- un organe mobile (50) coulissant dans ledit espace de détection (22), ledit organe mobile (50) partageant cet espace de détection (22) en une première chambre de détection (26) débouchant sur ledit espace interne (10) et une deuxième chambre de détection (27),
- un moyen de détection (29) de la position dudit organe mobile (50) dans ledit espace de détection (22) pour déterminer si l'organe mobile a atteint une position limite prédéterminée correspondant à la présence d'un effort limite exercé sur ladite servocommande.

2. Servocommande selon la revendication 1,
**caractérisée en ce que** ledit dispositif de détection (20) est amovible.

3. Servocommande selon l'une quelconque des revendications 1 à 2,
**caractérisée en ce que** ledit corps (2) comprend un moyen de fixation (5, 6) distinct dudit dispositif de détection (20) apte à fixer la servocommande (1) à un élément de fixation externe.

4. Servocommande selon l'une quelconque des revendications 1 à 3,
**caractérisée en ce que**, ladite servocommande (1) ayant une liaison (40) apte à relier ladite deuxième chambre de détection (27) à un moyen de pressurisation (9), ladite liaison (40) comporte un premier moyen générant une perte de charge (41).

5. Servocommande la revendication 1,
**caractérisée en ce que**, ladite servocommande (1) ayant une liaison (40) apte à relier ladite deuxième chambre de détection (27) à ladite source (9), ladite liaison (40) comporte un premier moyen générant une perte de charge (41).

6. Servocommande selon l'une quelconque des revendications 1 à 4,
**caractérisée en ce que**, ladite deuxième chambre de détection (27) est reliée à la chambre de l'espace interne (10) n'étant pas en relation avec la première chambre de détection (26).

7. Servocommande selon l'une quelconque des revendications 1 à 6,
**caractérisée en ce qu'**un deuxième moyen générant une perte de charge (42) peut être agencé entre la première chambre de détection et l'espace interne.

8. Servocommande selon l'une quelconque des revendications 1 à 7,
**caractérisée en ce que** ledit moyen de détection (29) est disposé sur ledit carter (21) à l'extérieur dudit espace de détection (22).

9. Servocommande selon l'une quelconque des revendications 1 à 8,
**caractérisée en ce que** ledit moyen de détection (29) comporte un interrupteur à ampoule (29') et un aimant (29") disposé sur ledit organe mobile (50).

10. Servocommande selon l'une quelconque des revendications 1 à 9,
**caractérisée en ce que** ledit dispositif de détection (20) comporte un moyen d'alerte (30) commandé par ledit moyen de détection (29).

11. Servocommande selon la revendication 1,
**caractérisée en ce qu'**elle comporte indifféremment :
- soit un unique dispositif de détection (20) ayant une première chambre de détection (26) débouchant sur la chambre de rétraction (4) de la servocommande (1),
- soit un unique dispositif de détection (20) ayant une première chambre de détection (26) débouchant sur la chambre d'extension (3) de la servocommande (1),
- soit un dispositif de détection (20) ayant une première chambre de détection (26) débouchant sur la chambre de rétraction (4) de la servocommande (1), et un dispositif de détection (20) ayant une première chambre de détection (26) débouchant sur la chambre d'extension (3) de la servocommande (1).

12. Servocommande selon l'une quelconque des revendications 1 à 11,
**caractérisée en ce que**, ladite servocommande (1) ayant deux corps (2) délimitant chacun un espace interne (10) et un élément coulissant (11) muni d'un piston de commande (12) par espace interne (10), au moins un corps (2) comporte au moins un dispositif de détection (20) d'effort limite.

13. Servocommande selon l'une quelconque des revendications 1 à 12,
**caractérisée en ce que** ledit dispositif de détection (20) comporte un moyen de rappel (28) de l'organe mobile (50) pour éloigner ledit organe mobile (50) de ladite position limite.

14. Servocommande selon l'une quelconque des revendications 1 à 12,
**caractérisée en ce que** ledit organe mobile (50) comprend une première section (51) et une deuxième section (52) distinctes, la deuxième section (52) de l'organe mobile (50) en regard de la deuxième chambre de détection (27) étant inférieure à la première section (51) de l'organe mobile (50) en regard de la première chambre de détection (26).

15. Servocommande selon l'une quelconque des revendications 1 à 14,
**caractérisée en ce qu'**elle comprend un moyen de blocage temporaire (60) dudit élément coulissant par rapport audit corps (2).

## Patentansprüche

1. Servosteuerung (1) mit mindestens einem Körper (2), der einen Innenraum (10) eingrenzt, und mit einem gleitenden Element (11), das mit einem Steuerkolben (12) versehen ist, der in dem Innenraum (10) gleiten kann, wobei der Steuerkolben (12) den Innenraum (10) in eine Retraktionskammer (4) und eine Ausdehnungskammer (3) unterteilt, die mit einem Fluid, welches von einer Quelle (9) geliefert wird, gespeist werden können, wobei die Servosteuerung (1) mindestens eine Vorrichtung (20) zur Erfassung einer Maximalkraft aufweist,
**dadurch gekennzeichnet, dass** die Vorrichtung (20) zur Erfassung einer Maximalkraft aufweist:
- ein Gehäuse (21), das mit dem Körper (2) fest verbunden ist und einen Erfassungsraum (22) begrenzt,
- ein bewegliches Element (50), das in dem Erfassungsraum (22) gleitet, wobei das bewegliche Element (50) den Erfassungsraum (22) in eine erste Erfassungskammer (26), die in den Innenraum (10) mündet, und in eine zweite Erfassungskammer (27) unterteilt,
- ein Mittel (29) zur Erfassung der Lage des beweglichen Elements (50) in dem Erfassungsraum (22), um zu bestimmen, ob das bewegliche Element eine vorbestimmte Maximalstellung erreicht hat, die der Anwesenheit einer Maximalkraft entspricht, die auf die Servosteuerung ausgeübt wird.

2. Servosteuerung nach Anspruch 1,
**dadurch gekennzeichnet, dass** die Erfassungsvorrichtung (20) abnehmbar ist.

3. Servosteuerung nach einem der Ansprüche 1 bis 2,
**dadurch gekennzeichnet, dass** der Körper (2) ein Befestigungsmittel (5, 6) aufweist, das separat von der Erfassungsvorrichtung (20) ist und die Servosteuerung (1) an einem externen Befestigungselement befestigen kann.

4. Servosteuerung nach einem der Ansprüche 1 bis 3,
**dadurch gekennzeichnet, dass** die Servosteuerung (1) eine Verbindung (40) aufweist, die die zweite Erfassungskammer (27) mit einem Druckausgleichsmittel (9) verbinden kann, wobei die Verbindung (40) ein erstes Mittel (41) aufweist, das einen Druckverlust erzeugt.

5. Servosteuerung nach Anspruch 1,
**dadurch gekennzeichnet, dass** die Servosteuerung (1) eine Verbindung (40) aufweist, die die zweite Erfassungskammer (27) mit der Quelle (9) verbinden kann, wobei die Verbindung (40) ein erstes Mittel (41) aufweist, das einen Druckverlust erzeugt.

6. Servosteuerung nach einem der Ansprüche 1 bis 4,
**dadurch gekennzeichnet, dass** die zweite Erfassungskammer (27) mit der Kammer des Innenraums (10), die nicht mit der ersten Erfassungskammer (26) in Beziehung steht, verbunden ist.

7. Servosteuerung nach einem der Ansprüche 1 bis 6,
**dadurch gekennzeichnet, dass** ein zweites Mittel (42), welches einen Druckverlust erzeugt, zwischen der ersten Erfassungskammer und dem Innenraum angeordnet sein kann.

8. Servosteuerung nach einem der Ansprüche 1 bis 7,
**dadurch gekennzeichnet, dass** das Erfassungsmittel (29) auf dem Gehäuse (21) außerhalb des Erfassungsraums (22) angeordnet ist.

9. Servosteuerung nach einem der Ansprüche 1 bis 8,
**dadurch gekennzeichnet, dass** das Erfassungsmittel (29) einen Reed-Schalter (29') und einen Magneten (29") aufweist, der auf dem beweglichen Element (50) angeordnet ist.

10. Servosteuerung nach einem der Ansprüche 1 bis 9,
**dadurch gekennzeichnet, dass** die Erfassungsvorrichtung (20) ein Alarmmittel (30) aufweist, das von dem Erfassungsmittel (29) gesteuert wird.

11. Servosteuerung nach Anspruch 1,
**dadurch gekennzeichnet, dass** sie unterschiedslos aufweist:
- entweder eine einzige Erfassungsvorrichtung (20) mit einer ersten Erfassungskammer (26), die in die Retraktionskammer (4) der Servosteuerung (1) mündet,
- oder eine einzige Erfassungsvorrichtung (20) mit einer ersten Erfassungskammer (26), die in die Ausdehnungskammer (3) der Servosteuerung (1) mündet,
- oder eine Erfassungsvorrichtung (20) mit einer ersten Erfassungskammer (26), die in die Retraktionskammer (4) der Servosteuerung (1) mündet, und eine Erfassungsvorrichtung (20) mit einer ersten Erfassungskammer (26), die in die Ausdehnungskammer (3) der Servosteuerung (1) mündet.

12. Servosteuerung nach einem der Ansprüche 1 bis 11,
**dadurch gekennzeichnet, dass** die Servosteuerung (1) zwei Körper (2) aufweist, die jeweils einen Innenraum (10) begrenzen, und ein gleitendes Element (11), das mit einem Steuerkolben (12) versehen ist, pro Innenraum (10), wobei mindestens ein Körper (2) mindestens eine Vorrichtung (20) zur Erfassung einer Maximalkraft aufweist.

13. Servosteuerung nach einem der Ansprüche 1 bis 12,
**dadurch gekennzeichnet, dass** die Erfassungsvorrichtung (20) ein Rückholmittel (28) des beweglichen Elements (50) aufweist, um das bewegliche Element (50) von der Maximalposition abzurücken.

14. Servosteuerung nach einem der Ansprüche 1 bis 12,
**dadurch gekennzeichnet, dass** das bewegliche Element (50) einen ersten Querschnitt (51) und einen zweiten separaten Querschnitt (52) aufweist, wobei der zweite Querschnitt (52) des beweglichen Elements (50), der der zweiten Erfassungskammer (27) gegenüberliegt, kleiner ist als der erste Querschnitt (51) des beweglichen Elements (50), der der ersten Erfassungskammer (26) gegenüberliegt.

15. Servosteuerung nach einem der Ansprüche 1 bis 14,
**dadurch gekennzeichnet, dass** diese ein Mittel (60) zur zeitweisen Blockierung des gleitenden Elements relativ zu den Körpern (2) aufweist.

## Claims

1. Servo-control (1) provided with at least one body (2) delimiting an inside space (10) and a sliding element (11) equipped with a control piston (12) suitable for sliding in said inside space (10), said control piston (12) dividing said inside space (10) into a retraction chamber (4) and an extension chamber (3) suitable for being fed with a fluid delivered by a source (9), said servo-control (1) having at least one limit force detection device (20),
**characterised in that** said limit force detection device (20) comprises:
- a casing (21) integral with said body (2) delimiting a detection space (22),
- a movable member (50) sliding in said detection space (22), said movable member (50) dividing this detection space (22) into a first detection chamber (26) opening onto said inside space (10) and a second detection chamber (27),
- a detection means (29) for detecting the position of said movable member (50) in said detection space (22) in order to determine whether the movable member has reached a predetermined limit position corresponding to the presence of a limit force exerted on said servo-control.

2. Servo-control according to claim 1,
**characterised in that** said detection device (20) is removable.

3. Servo-control according to any one of claims 1 to 2, **characterised in that** said body (2) comprises a fastening means (5, 6) distinct from said detection device (20) suitable for fastening the servo-control (1) to an external fastening element.

4. Servo-control according to any one of claims 1 to 3,
**characterised in that**, said servo-control (1) having a connection (40) suitable for connecting said second detection chamber (27) to a pressurisation means (9), said connection (40) comprises a first headloss-generating means (41).

5. Servo-control according to claim 1,
**characterised in that**, said servo-control (1) having a connection (40) suitable for connecting said second detection chamber (27) to said source (9), said connection (40) comprises a first headloss-generating means (41).

6. Servo-control according to any one of claims 1 to 4,
**characterised in that**, said second detection chamber (27) is connected to the chamber of the inside space (10) not being in communication with the first detection chamber (26).

7. Servo-control according to any one of claims 1 to 6,
**characterised in that** a second headloss-generating means (42) may be arranged between the first detection chamber and the inside space.

8. Servo-control according to any one of claims 1 to 7,
**characterised in that** said detection means (29) is arranged on said casing (21) outside said detection space (22).

9. Servo-control according to any one of claims 1 to 8,
**characterised in that** said detection means (29) comprises a reed switch (29') and a magnet (29") arranged on said movable member (50).

10. Servo-control according to any one of claims 1 to 9,
**characterised in that** said detection device (20) comprises a warning means (30) controlled by said detection means (29).

11. Servo-control according to claim 1,
**characterised in that** it comprises equally well:
- a single detection device (20) having a first detection chamber (26) opening onto the retraction chamber (4) of the servo-control (1),
- a single detection device (20) having a first detection chamber (26) opening onto the extension chamber (3) of the servo-control (1), or
- a detection device (20) having a first detection chamber (26) opening onto the retraction chamber (4) of the servo-control (1), and a detection device (20) having a first detection chamber (26) opening onto the extension chamber (3) of the servo-control (1).

12. Servo-control according to any one of claims 1 to 11, **characterised in that**, said servo-control (1) having two bodies (2), each delimiting an inside space (10) and a sliding element (11) equipped with one control piston (12) per inside space (10), at least one body (2) comprises at least one limit force detection device (20).

13. Servo-control according to any one of claims 1 to 12,
**characterised in that** said detection device (20) comprises a means for returning (28) the movable member (50) for moving said movable member (50) away from said limit position.

14. Servo-control according to any one of claims 1 to 12,
**characterised in that** said movable member (50) comprises a first section (51) and a second section (52) which are distinct, the second section (52) of the movable member (50) facing the second detection chamber (27) being smaller than the first section (51) of the movable member (50) facing the first detection chamber (26).

15. Servo-control according to any one of claims 1 to 14,
**characterised in that** it comprises a means for temporarily blocking (60) said sliding element relative to said body (2).
